(19) **Europäisches Patentamt**

**European Patent Office**

**Office européen des brevets**

(11) **EP 1 054 536 B1**

(12) **EUROPEAN PATENT SPECIFICATION**

(45) Date of publication and mention
of the grant of the patent:
**23.08.2006 Bulletin 2006/34**

(51) Int Cl.:
***H04L 25/03*** *(2006.01)*

(21) Application number: **00110714.3**

(22) Date of filing: **19.05.2000**

(54) **Non-recursive adaptive filter, with variable orders of non-linear processing**

Nicht-rekursives, adaptives Filter, mit variablen Folgen der nicht-linearen Verarbeitung

Filtre adaptatif, non-récursif, avec traitement non-linéaire à ordre variable

(84) Designated Contracting States:
**DE FR GB**

(30) Priority: **20.05.1999 JP 14063299**

(43) Date of publication of application:
**22.11.2000 Bulletin 2000/47**

(73) Proprietor: **NEC CORPORATION**
**Tokyo (JP)**

(72) Inventor: **Koike, Shinichi**
**Tokyo (JP)**

(74) Representative: **Vossius & Partner**
**Siebertstrasse 4**
**81675 München (DE)**

(56) References cited:
**GB-A- 2 260 068**     **US-A- 5 506 871**
**US-A- 5 793 820**     **US-A- 5 887 059**

**Description**

The present invention relates to an adaptive filter, a control method of an adaptive filter and a storage medium storing therein a program thereof. More to particularly, this invention relates to an adaptive filter which is suitable for use in an echo canceller which is employed in data transmission and in an acoustic system, an automatic equalizer for digital data transmission, or further generally use in identification of unknown system or so forth, and a control method for implementing tap weight control of this adaptive filter, and a storage medium storing therein a program for executing such control method.

Firstly, there is described the principles of adaptive filter.

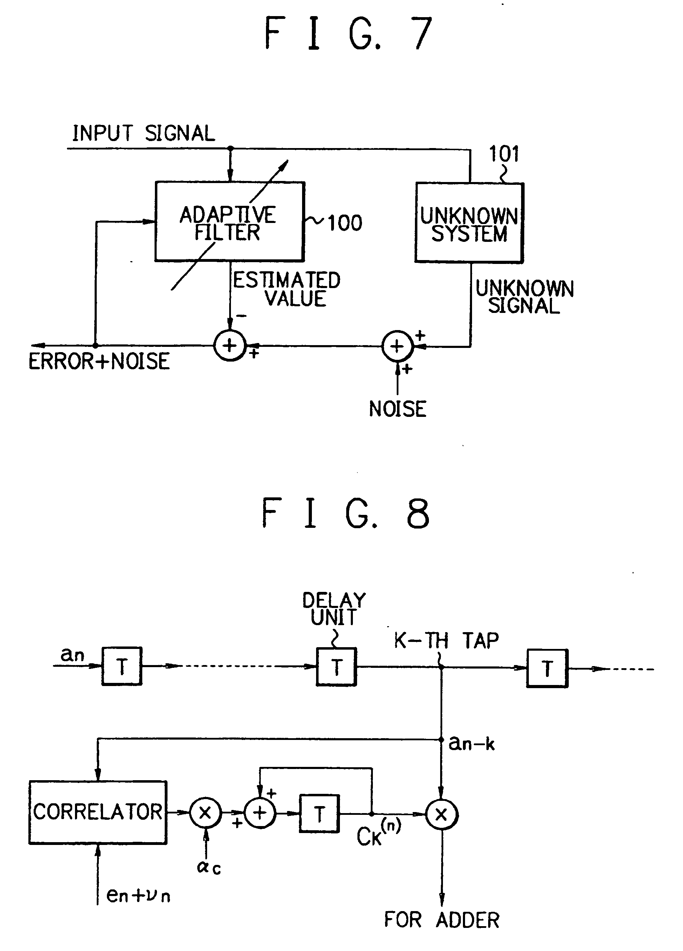

Fig. 7 is a principle view of the adaptive filter. In Fig. 7 the adaptive filter 100 prepares an estimated value of unknown signal series from a known filter input signal series. The adaptive filter 100 updates a parameter belonging to the filter on the basis of signal series of error between such the estimated value series and the unknown signal series. The adaptive filter 100 identifies unknown system 101 rightly.

Additive noise at the time of ordinary observation is added to the unknown signal series. The adaptive filter 100 converges from initial state of unlearned to final state. Further, in frequent cases, the unknown signal series is given as the response to the above-described signal series of the unknown system 101. This case is corresponding to the echo canceller and / or the automatic equalizer.

In frequent cases, the adaptive filter is materialized as a non-recursive filter (FIR ; Finite Impulse Response). As shown in Fig. 8, the adaptive filter has constitution using delay unit of plural stages. Fig. 8 shows a control circuit of the k-th tap weight. Here, it causes the k-th tap weight $c_k^{(n)}$ to be controlled while obtaining correlation value using the sum between an error signal $e_n$ and an additive noise $v_n$ and a filter input signal $a_{n-k}$ in such the tap. In Fig. 8 "n" is the time, "$a_n$" is an input signal, and "$\alpha_c$" is a step gain.

Now, a tap weight control algorithm uses a correlation value obtained in such a way that the sum between the error signal and the additive noise is multiplied by the input signal. As the tap weight control algorithm, next LMS algorithm is well known. Further, it is utilized widely.

It can be written as follows about the k-th tap weight:

$$c_k^{(n+1)} = c_k^{(n)} + \alpha_c (e_n + v_n) a_{n-k} \quad \cdots\cdots (1)$$

Next, another tap weight control algorithm uses a correlation value obtained in such a way that the polarity of the sum between the error signal and the additive noise is multiplied by the polarity of the input signal. As the tap weight control algorithm, next sign-sign algorithm is well known.

It can be written as follows about the k-th tap weight:

$$c_k^{(n+1)} = c_k^{(n)} + \alpha_c \, \text{sgn} (e_n + v_n) \, \text{sgn} (a_{n-k}) \quad \cdots\cdots (2)$$

Here, sgn ( ) is the polarity function, thus if the factor is positive (or negative), "+1" (or "-1") is outputted.

The above-described sign-sign algorithm can be materialized very easily because the polarity is multiplied by the polarity. Simultaneously, there is advantage that the operation is stabilized when there is large internal disturbance in the additive noise and the input signal. However, there is the fault that convergence of the filter is slow in comparison with the above described LMS algorithm.

Consequently, it is desired that it causes speedy convergence which the LMS algorithm has to be realized while making the best use of above characteristic of the sign-sign algorithm.

US-A-5 887 059 discloses a system for performing echo cancellation in a communications network employing a mixed mode LMS adaptive balance filter.

In view of the foregoing, it is an object of the present invention, in order to overcome the above mentioned problem, to provide an adaptive filter, a control method of the adaptive filter and storage medium storing therein a program thereof which realize the adaptive filter and its tap weight control method, and which are robust to internal disturbance after convergence. The sign-sign algorithm is improved to have high-speed convergence. This object is achieved with the features of the claims.

The above and further objects and novel features of the invention will be more fully understood from the following detailed description when the same is read in connection with the accompanying drawings. It should be expressly understood, however, that the drawings are for purpose of illustration only and are not intended as a definition of the limits of the invention.

Fig. 1 is a block diagram showing an adaptive filter using a tap weight control method according to an embodiment of the present invention;

Fig. 2 is a block diagram showing a constitution of a correlation nonlinear processor of Fig. 1;

Fig. 3 is a block diagram showing a constitution of a leakage accumulator of Fig. 1;

Figs. 4A and 4B are block diagrams showing an exponent generator of Fig. 1;

Figs. 5A and 5B are graphs showing function example giving the power according to the embodiment of the present invention;

Figs. 6A and 6B are graphs showing simulation result of the adaptive filter according to the embodiment of the present invention;

Fig. 7 is a block diagram showing principle of the adaptive filter; and

Fig. 8 is a block diagram explaining tap weight control algorithm of non-recursive type adaptive filter.

A preferred embodiment of the present invention will be described in detail in accordance with the accompanying drawings.

Firstly, there will be described a present embodiment in accordance with principle.

It is capable of being written the above-mentioned tap weight update expression of the sign-sign algorithm as follows:

$$c_k^{(n+1)} = c_k^{(n)} + \alpha_c \, \mathrm{sgn} \left\{ (e_n + v_n) \, a_{n-k} \right\} \quad \cdots\cdots (3)$$

The following generalized update expression is introduced from expression (3).

$$c_k^{(n+1)} = c_k^{(n)} + \alpha_c \, f(z_k^{(n)}) \quad \cdots\cdots (4)$$

where

$$z_k^{(n)} = (e_n + v_n) \, a_{n-k} \quad \cdots\cdots (5)$$

The expression (5) is a correlation value. The function "f ( )" is generally a non-linear function and an odd function. Since such an algorithm gives a correlation value $z_k^{(n)}$ to a non-linear function and performs non-linear processing, it can be called "correlation non-linear algorithm".

The above non-linear function can take various kinds of forms. Now the following exponential function (odd function) is proposed:

$$f(z) = \mathrm{sgn}(z) \, |z|^{\wedge} r \quad \cdots\cdots (6)$$

Here, "a ^ b" dictates the b-th power of the number a. Further, where the exponent $r \geqq 0$, the algorithm has various names particularly,

r = 0 : sign-sign algorithm,
r = 1 : LMS algorithm, and
r = 3 : least mean fourth (LMF) algorithm.

Thus various algorithms are obtained according to value of "r" .

Next, where this exponential function to be applied to the above updating of the tap weight, adaptive control of the value of exponent is considered. Namely, update expression of the k-th tap weight becomes as follows

$$c_k^{(n+1)} = c_k^{(n)} + \alpha_c \, \mathrm{sgn}(z_k^{(n)}) \, |z_k^{(n)}|^{\wedge} r_k^{(n)} \quad \cdots\cdots (7)$$

Here, $r_k^{(n)}$ is the exponent at the time "n".

Now, the exponent $r_k^{(n)}$ is given as the function of estimated value $P_k^{(n)}$ of the electric power of an error signal as follows:

$$r_k^{(n)} = g\ (P_k^{(n)})\ .\cdots\cdots(8)$$

Further, the electric power estimated value $P_k^{(n)}$ is obtained by following procedure: the average quantity $q_k^{(n)}$ is raised to the second power and is obtained by leakage accumulator with the above $z_k^{(n)}$ as the input. Namely,

$$P_k^{(n)} = (q_k^{(n)})^2\ \cdots\cdots(9)\quad ,$$

and

$$q_k^{(n+1)} = (1-\rho)\ q_k^{(n)} +\ \rho\ \ z_k^{(n)}\ \cdots\cdots(10)$$

where $\rho$ is a leakage coefficient

Various forms are also considered for the function g ( ). However next two forms are practical.

(a) STEP SHAPED VARIATION TYPE

$$g(P) = \begin{cases} r_{max} & for\ P > P_{th} \\ 0 & for\ P < P_{th} \end{cases} \cdots\cdots(11)$$

Here, $P_{th}$ is an electric power threshold value, and $r_{max}$ is the maximum value the exponent can take. Fig. 5A is a graph showing above g(P).

(b) LOGARITHMIC LINEAR TYPE

$$g(P) = \begin{cases} r_{max} & for\ P(dB) > P_{max}(dB) \\ r_{max}\{P(dB) - P_{min}(dB)\}/\{P_{max}(dB) - P_{min}(dB)\} \\ \qquad for\ P_{min}(dB) < P(dB) < P_{max}(dB) \\ 0 & for\ P(dB) < P_{min}(dB) \end{cases} \cdots\cdots(12)$$

Here, P(dB), maximum electric power value $P_{max}$ (dB), and minimum electric power value $P_{min}$ (dB) are quantity represented by using decibel.

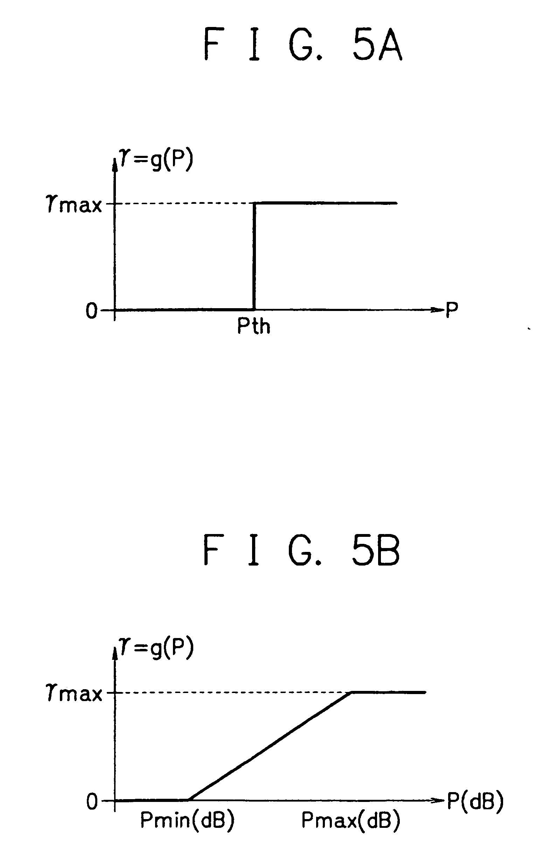

Fig. 5B is a graph showing above g(P).

Next, there will be described the embodiment of the present invention on the basis of the principles described above.

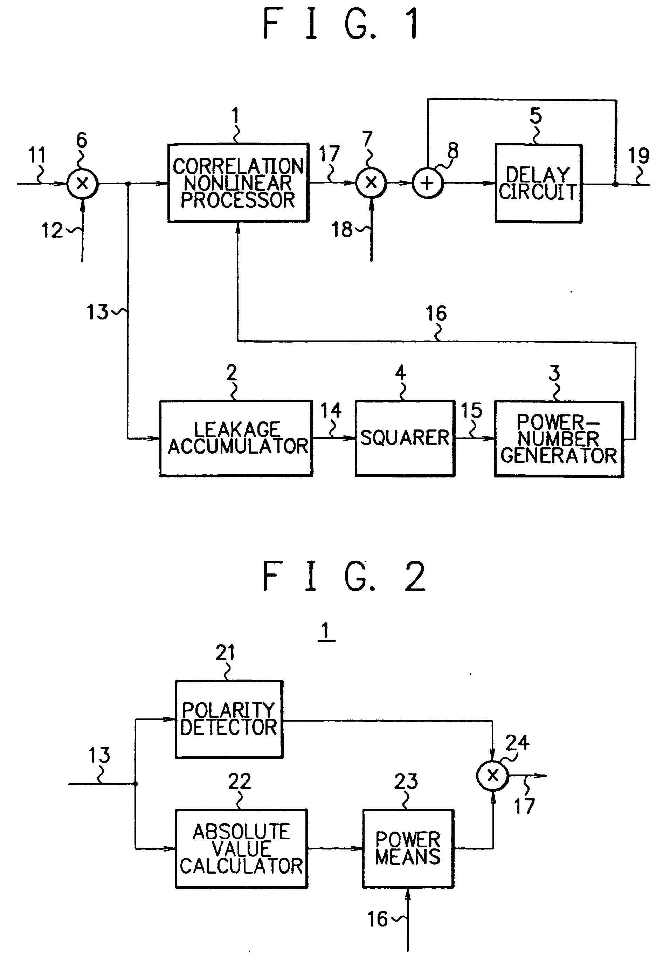

Fig. 1 shows the adaptive filter according to the embodiment of the present invention.

In Fig. 1, an input signal 11 is $a_{n-k}$. A sum 12 between an error signal and an additive noise is $e_n + v_n$. A correlation value 13 is $z_k^{(n)}$. The correlation value 13 ($z_k^{(n)}$) is obtained in such a way that the input signal 11 ($a_{n-k}$) is multiplied by the sum 12 ($e_n + v_n$). An average quantity 14 is $q_k^{(n)}$. The average quantity 14 ($q_k^{(n)}$) is obtained in such a way that the correlation value 13 ($z_k^{(n)}$) is averaged by a leakage accumulator 2. The average quantity 14 ($q_k^{(n)}$) is squared by a square means 4 so that an estimated value 15 ($P_k^{(n)}$) of the error signal is obtained. Next, an exponent generator 3 outputs the exponent 16 ($r_k^{(n)}$) of the exponential function on the basis of the above described estimated value 15.

On the other hand, the correlation non-linear processor 1 outputs a signal 17 while executing processing to the input signal 13 with the exponential function of the exponent 16. A multiplier 7 multiplies the signal 17 by a step gain 18, before the correlation non-linear processor 1 outputs a tap weight 19 ($c_k^{(n)}$) which is updated by means of a delay circuit operating one unit time and an adder 8.

Fig. 2 shows a detailed constitution of the above correlation non-linear processor 1.

In Fig. 2, polarity is obtained from the input signal 13 by means of a polarity detector 21. On the other hand, an absolute value calculator 22 calculates an absolute value of the input signal 13. The obtained absolute value is raised to the exponent 16 by a power means 23. The raised value is multiplied by the above polarity to obtain the product, so that the product is outputted as the above signal 17.

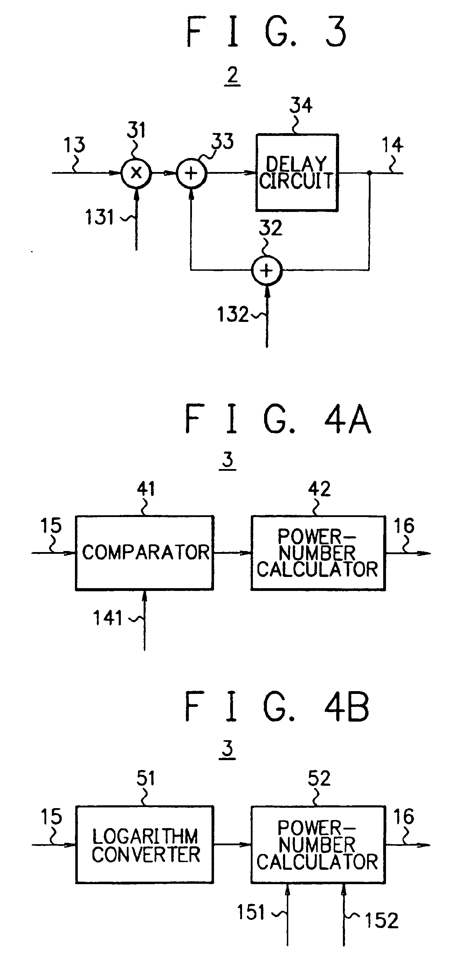

Fig. 3 shows detailed constitution of the above leakage accumulator 2.

In Fig. 3, the input signal 13 is multiplied by a leakage coefficient 131 to obtain the product. The product is taken as one input of the adder 33. The output of the adder 33 is delayed one unit time at a delay circuit and the above average quantity 14 is outputted from the delay circuit. Simultaneously, the average quantity 14 is multiplied by a complement 132 of the leakage coefficient by means of the multiplier 32. Such the product is taken as the other input of the above adder 33.

Figs. 4A and 4B show detailed constitution of the exponent generator 3 according to the function g (P) described previously. Fig. 5A shows an example of the above step shaped variation type g (P). Fig. 5B shows an example of the above logarithmic linear type g (P).

In Fig. 4A, at a comparator 41, the electric power estimated value 15 of the inputted error signal is compared with an electric power threshold value 141 given beforehand. The exponent calculator 42 outputs the exponent 16 which is either the maximum value or "0" (zero) on the basis of the comparison result.

In Fig. 4B, a logarithm converter 51 converts the electric power estimated value 15 of the inputted error signal into a decibel value. An exponent calculator 52 outputs the exponent 16 based on the decibel value, the minimum electric power decibel value 151, and the maximum electric power decibel value 152.

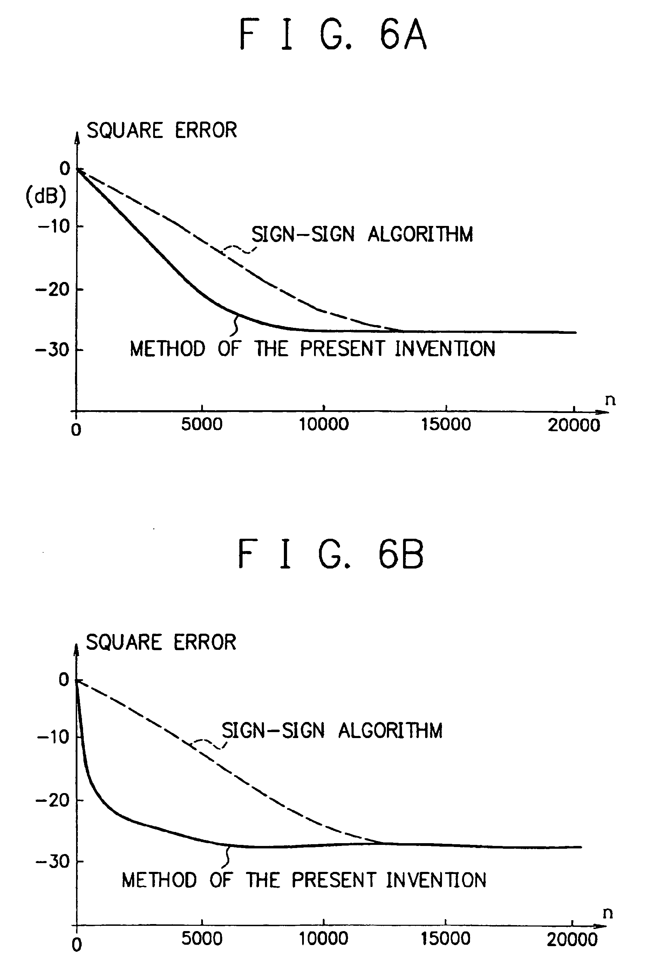

Figs. 6A, and 6B show simulation results of convergence process of the adaptive filter according to the present embodiment. Fig. 6A shows an example of simulation result of the convergence process of the adaptive filter in case of using a "step shaped variation type" exponent generator (referring to Fig. 4A). Fig. 6B shows an example of simulation result of the convergence process of the adaptive filter in case of using "logarithm linear type" exponent generator (referring to Fig. 4B)

Both Figs. 6A, and 6B, show remarkably quick convergence speed in comparison with the case of the conventional sign-sign algorithm. Further, the value of the exponent becomes 0 (zero) after convergence, thus it is confirmed that the method of the invention reaches the sign-sign algorithm.

Furthermore, in the case where the present embodiment is constituted by the computer system consisting of storage device such as CPU, ROM, and so forth, the above described storage device constitutes the storage medium of the present invention. The storage medium stores therein a program for executing processing for performing operation described in the above described embodiment.

Moreover, it is capable of employing a semiconductor storage device, an optical disk, a magneto-optical disk, a magnetic recording medium, and so forth as the storage medium.

As described above, according to the present invention, in the adaptive filter using the sign-sign algorithm, the present invention becomes robust to the internal disturbance after convergence, and also enables convergence speed to be high.

While preferred embodiments of the invention have been described using specific terms, the description has been for illustrative purposes only, and it is to be understood that changes and variations may be made without departing from the scope of the following claims.

**Claims**

1. An adaptive filter having a non-recursive filter, which multiplies the sum between an error signal and an additive noise signal by the input signal in every respective tap to produce a correlation signal, then applying a non-linear function to the correlation signal, before updating the weight coefficients of each of said respective taps according to the product between the output of the non-linear function and a step gain, said adaptive filter comprising:

   a control means for controlling exponent of an exponential function on the basis of an estimated value of the electric power of said error signal, wherein said exponential function is said non-linear function and the updating of the coefficients results from the addition of the calculated non-linear term $\alpha_c \cdot f(z_k^{(n)})$ with the previous coefficient

$c_k^{(n)}$.

**2.** An adaptive filter as claimed in claim 1, wherein said control means consists of an estimation means for obtaining an estimated value of said error signal from an average value of said correlation value, and an exponent generation means (3) for generating said exponent on the basis of said estimated value.

**3.** An adaptive filter as claimed in claim 2, wherein said power exponent generation means (3) consists of a comparison means (41) for comparing said estimated value with a threshold value, and a calculation means (42) for calculating an exponent which is either the maximum value or "0" (zero) on the basis of comparison result of said comparison means.

**4.** An adaptive filter as claimed in claim 2, wherein said exponent generation means (3) consists of a conversion means (51) for converting said estimated value into a decibel value, and a calculation means (52) for calculating an exponent while using said decibel value, a minimum decibel value, and a maximum decibel value.

**5.** A control method for an adaptive filter having a non-recursive filter, comprising the following steps:

- multiplying the sum between an error signal and an additive noise signal by the input signal in every respective tap to produce a correlation signal,
- applying a non-linear function to the correlation signal,
- updating the weight coefficients of each of said respective taps according to the product between the output of the non-linear function and a step gain,
- controlling an exponent of an exponential function on the basis of an estimated value of the electric power of said error signal, wherein said exponential function is a non-linear function, and updating the coefficients by the addition of the calculated non-linear term $\alpha_c \bullet f(z_k^{(n)})$ with the previous coefficient $c_k^{(n)}$.

**6.** A computer-readable medium comprising program code adapted to carry out the method of claim 5 when run on a computer.

**Patentansprüche**

**1.** Adaptives Filter mit einem nicht-rekursiven Filter, das eine Summe aus einem Fehlersignal und einem additiven Rauschsignal mit dem Eingangssignal in jedem Abgriff (Tap) multipliziert, um ein Korrelationssignal zu erzeugen, und dann eine nicht-lineare Funktion auf das Korrelationssignal anwendet, bevor die Gewichtkoeffizienten jedes entsprechenden Abgriffs gemäß dem Produkt zwischen dem Ausgangssignal der nicht-linearen Funktion und einer Stufenverstärkung aktualisiert werden, wobei das adaptive Filter aufweist:

eine Steuereinrichtung zum Steuern eines Exponenten einer Exponentialfunktion auf der Basis eines Schätzwertes der elektrischen Leistung des Fehlersignals, wobei die Exponentialfunktion die nicht-lineare Funktion ist und die Aktualisierung der Koeffizienten durch die Addition des berechneten nicht-linearen Ausdrucks $\alpha_c \cdot f(z_k^{(n)})$ mit dem vorangehenden Koeffizienten $c_k^{(n)}$ erhalten wird.

**2.** Adaptives Filter nach Anspruch 1, wobei die Steuereinrichtung aus einer Schätzeinrichtung zum Bestimmen eines Schätzwertes des Fehlersignals basierend auf einem Mittelwert des Korrelationswertes und einer Exponenterzeugungseinrichtung (3) zum Erzeugen des Exponenten auf der Basis des Schätzwertes besteht.

**3.** Adaptives Filter nach Anspruch 2, wobei die Exponenterzeugungseinrichtung (3) aus einer Vergleichseinrichtung (41) zum Vergleichen des Schätzwertes mit einem Schwellenwert und einer Berechnungseinrichtung (42) zum Berechnen eines Exponenten, der entweder dem Maximalwert oder "0" (null) entspricht, auf der Basis des Vergleichsergebnisses der Vergleichseinrichtung besteht.

**4.** Adaptives Filter nach Anspruch 2, wobei die Exponenterzeugungseinrichtung (3) aus einer Umwandlungseinrichtung (51) zum Umwandeln des Schätzwertes in einen Dezibelwert und einer Recheneinrichtung (52) zum Berechnen eines Exponenten unter Verwendung des Dezibelwertes, eines minimalen Dezibelwertes und eines maximalen Dezibelwertes besteht.

**5.** Steuerungsverfahren für ein adaptives Filter, das ein nicht-rekursives Filter aufweist, mit den Schritten:

Multiplizieren einer Summe aus einem Fehlersignal und einem additiven Rauschsignal mit einem Eingangssignal in jedem entsprechenden Abgriff zum Erzeugen eines Korrelationssignals,
Anwenden einer nicht-linearen Funktion auf das Korrelationssignal;
Aktualisieren der Gewichtkoeffizienten jedes der entsprechenden Abgriffe gemäß dem Produkt zwischen dem Ausgangssignal der nicht-linearen Funktion und einer Stufenverstärkung;
Steuern eines Exponenten einer Exponentialfunktion auf der Basis eines Schätzwertes der elektrischen Leistung des Fehlersignals, wobei die Exponentialfunktion eine nicht-lineare Funktion ist; und
Aktualisieren der Koeffizienten durch Addieren des berechneten nicht-linearen Ausdrucks $\alpha_c \cdot f(z_k^{(n)})$ mit dem vorangehenden Koeffizienten $c_k^{(n)}$.

6. Computerlesbares Medium mit einem Programmcode, der dazu geeignet ist, das Verfahren nach Anspruch 5 auszuführen, wenn er auf einem Computer ausgeführt wird.

**Revendications**

1. Filtre adaptatif possédant un filtre non-récursif, qui multiplie la somme entre un signal d'erreur et un signal de bruit additif par le signal d'entrée dans chaque prise respective pour produire un signal de corrélation, appliquant ensuite une fonction non-linéaire au signal de corrélation, avant de mettre à jour les coefficients de pondération de chacune desdites prises respectives en fonction du produit entre la sortie de la fonction non-linéaire et un gain d'étape, ledit filtre adaptatif comprenant :

   des moyens de commande pour commander un exposant d'une fonction exponentielle sur la base d'une valeur estimée de la puissance électrique dudit signal d'erreur,
   dans lequel ladite fonction exponentielle est ladite fonction non-linéaire et la mise à jour des coefficients est causée par l'addition du terme non-linéaire calculé $\alpha_c \cdot f(z_k^{(n)})$ avec le coefficient antérieur $c_k^{(n)}$.

2. Filtre adaptatif selon la revendication 1, dans lequel lesdits moyens de commande consistent en des moyens d'estimation pour obtenir une valeur estimée dudit signal d'erreur à partir d'une valeur moyenne de ladite valeur de corrélation, et des moyens de génération d'exposant (3) pour générer ledit exposant sur la base de ladite valeur estimée.

3. Filtre adaptatif selon la revendication 2, dans lequel lesdits moyens de génération d'exposant (3) consistent en des moyens de comparaison (41) pour comparer ladite valeur estimée avec une valeur de seuil, et des moyens de calcul (42) pour calculer un exposant qui est soit la valeur maximale soit "0" (zéro) sur la base du résultat de comparaison desdits moyens de comparaison.

4. Filtre adaptatif selon la revendication 2, dans lequel lesdits moyens de génération d'exposant (3) consistent en des moyens de conversion (51) pour convertir ladite valeur estimée en une valeur en décibel, et des moyens de calcul (52) pour calculer un exposant tout en utilisant ladite valeur en décibel, une valeur en décibel minimale, et une valeur en décibel maximale.

5. Procédé de commande pour un filtre adaptatif possédant un filtre non-récursif, comprenant les étapes ci-après .

   - multiplier une somme entre un signal d'erreur et un signal de bruit additif par le signal d'entrée dans chaque prise respective pour produire un signal de corrélation,
   - appliquer une fonction non-linéaire au signal de corrélation,
   - mettre à jour les coefficients de pondération de chacune desdites prises respectives en fonction du produit entre la sortie de la fonction non-linéaire et un gain d'étape,
   - commander un exposant d'une fonction exponentielle sur la base d'une valeur estimée de la puissance électrique dudit signal d'erreur,

   dans lequel ladite fonction exponentielle est une fonction non-linéaire, et

   - mettre à jour les coefficients par l'addition du terme non-linéaire calculé $\alpha_c \cdot f(z_k^{(n)})$ avec le coefficient antérieur $c_k^{(n)}$.

6. Support lisible par ordinateur, comprenant un code de programme adapté pour exécuter le procédé de la revendication 5 lorsqu'il passe sur un ordinateur.

# F I G. 1

# F I G. 2

# F I G. 3

2

# F I G. 4A

3

# F I G. 4B

3

# F I G. 5A

# F I G. 5B

# F I G. 6A

SQUARE ERROR

0

(dB)

−10 ····· SIGN−SIGN ALGORITHM

−20

−30 METHOD OF THE PRESENT INVENTION

0    5000    10000    15000    20000    n

# F I G. 6B

SQUARE ERROR

0

−10    SIGN−SIGN ALGORITHM

−20

−30    METHOD OF THE PRESENT INVENTION

0    5000    10000    15000    20000    n

# F I G. 7

INPUT SIGNAL

101

ADAPTIVE
FILTER ~100

UNKNOWN
SYSTEM

ESTIMATED
VALUE

UNKNOWN
SIGNAL

−

ERROR+NOISE

+

+

+

NOISE

# F I G. 8

DELAY
UNIT

K−TH TAP

$a_n$  T  T  T

$a_{n-k}$

CORRELATOR  ×  +  T  $C_K^{(n)}$  ×

+

$\alpha_c$

$e_n + \nu_n$

FOR ADDER

13